# EUROPÄISCHE PATENTSCHRIFT

(11) **EP 2 812 471 B1**
(45) Veröffentlichungstag und Bekanntmachung des Hinweises auf die Patenterteilung: **15.04.2020**
(21) Anmeldenummer: 13703105.0
(22) Anmeldetag: 08.02.2013
(51) Int. Cl.: B60R 21/235, D04H 3/009, D04H 3/12, D02J 1/18, B65H 51/005, D04H 3/011, D04H 3/04

(54) **BÄNDCHENGARN**
TAPE YARN
RUBAN DE FILS

(30) Priorität: 10.02.2012 EP 12154856
(43) Veröffentlichungstag der Anmeldung: 17.12.2014
(73) Patentinhaber: PHP Fibers GmbH, 63784 Obernburg (DE)
(72) Erfinder: BONGARTZ, Marianne, 41179 Mönchengladbach (DE); FLACHENECKER, Andreas, 45276 Essen (DE); VIETH, Christian, 63939 Wörth (DE); CZIOLLEK, Joachim, 63870 Elsenfeld (DE); THIENEL, Alexander, 63834 Sulzbach (DE)
(74) Vertreter: CPW GmbH
(86) Internationale Anmeldenummer: PCT/EP2013/052596
(87) Internationale Veröffentlichungsnummer: WO 2013/117728

(56) Entgegenhaltungen:
- EP-A1- 1 839 831
- EP-A1- 2 374 923
- EP-A2- 0 259 870
- EP-A2- 1 908 575
- WO-A1-01/83345
- JP-A- 3 276 845
- DATABASE WPI Week 199209 Thomson Scientific, London, GB; AN 1992-069908 XP002677726, -& JP 4 015142 A (BANDO CHEM IND LTD) 20. Januar 1992 (1992-01-20)
- DATABASE WPI Week 199209 Thomson Scientific, London, GB; AN 1992-069909 XP002677727, -& JP 4 015143 A (BANDO CHEM IND LTD) 20. Januar 1992 (1992-01-20)
- DATABASE WPI Week 199209 Thomson Scientific, London, GB; AN 1992-069910 XP002677728, -& JP 4 015144 A (BANDO CHEM IND LTD) 20. Januar 1992 (1992-01-20)

## Beschreibung

Die vorliegende Erfindung betrifft ein Verfahren zur Herstellung eines Bändchengarns sowie die Verwendung eines solchen Bändchengarns, z.B. für die Herstellung von Airbaggeweben oder von Reifenverstärkungen.
Bändchengarne zur Herstellung von Airbags sind beispielsweise aus der EP-A-2 374 923 bekannt. In diesem Dokument wird eine Mehrzahl von Garnen aus individuellen Fasern mit einem "aktivierbaren" Additiv bzw. einer Beschichtung (Coating) behandelt und anschließend einem Aktivierungsschritt unterzogen, so dass die Garne eine flache Konfiguration annehmen.
Typischerweise sind Airbags als Gewebe konstruiert, und werden zunächst zu einem engen Paket gefaltet und/oder gerollt und hinter einer Abdeckung in ein Airbag-Modul eingebracht.
Der gefaltete Airbag ist mit einem Gasgenerator verbunden, der so konfiguriert ist, dass ein großes Volumen an Gas unmittelbar nach Erhalt eines sogenannten Aufprall-Signals eingebracht wird. Angesichts des sehr kurzen Zeitraums, innerhalb dessen ein Airbag aufgeblasen wird, um einen ausreichenden Schutz für einen Fahrzeuginsassen im Falle eines Crashs zu ergeben, werden erhebliche Strömungsgeschwindigkeiten erreicht und das Gas ist darüber hinaus je nach eingesetztem Generatortyp sehr heiß. Aus diesen Gründen ist es üblich, das Gewebe des Airbags mit einer Oberflächenbeschichtung zu versehen, um zumindest eine Kurzzeithitzebeständigkeit zu erzielen und die Durchlässigkeit für heiße Partikel zu erschweren.
Üblicherweise werden dazu Gewebe aus Polyamid-Material verwendet und das Gewebe mit einer Silikon-Beschichtung versehen, um eine gute Dichtheit gegenüber Gasen und Partikeln zu erzielen. Gleichzeitig erlaubt diese Konstruktion eine relativ gute Alterungsbeständigkeit der Airbags.
Nachteilig an dieser Konstruktion ist der nicht unerhebliche Einsatz an Material sowohl für die Herstellung eines relativ dichten Gewebes als auch für dessen Beschichtung. Aufgrund der zunehmenden Preise für die in der Regel auf Erdöl basierenden synthetischen Polymere für die Herstellung der Filamente, des immer größer werdenden Einsatzes von Airbags in Automobilen aller Art und aufgrund des extremen Preisdrucks innerhalb der Automobilindustrie muss nach Möglichkeiten gesucht werden, einen Airbag herzustellen, bei dem - ohne Einbuße an Performance - der Materialaufwand nach Möglichkeit begrenzt wird. Dazu kommt die Forderung der Automobilindustrie nach Gewichts- und Raumbedarfsreduzierung für alle verwendeten Teile, so auch für den Airbag (Luftsack).
JP 03 276845 (Bando Chem Ind Ltd.) schlägt ein Verfahren zur Herstellung eines Bändchengarns vor, dass die Schritte Vorlegen eines Garnes aus Mutifilamenten, Aufspreizen des Garnes, Fixieren des Garnes durch Ausbildung einer Matrix aus einem Elastomeren und Aufwickeln des Garnes ohne Verdrehung enthält, wobei das Aufspreizen so durchgeführt wird, dass nicht mehr als fünf Filamente übereinander liegen. Das Verhältnis von Filament zu Elastomer beträgt 90-40:10-60.
In der JP 04 015143 vom selben Anmelder wird ein Bändchengarn in einer sogenannten Dipping Anlage mit einem Elastomer auf Basis Silikonkautschuk oder Recorcin-Formaldehyd-Latex (RFL) versehen.
Die US 2004/004321 schließlich beschreibt das Aufspreizen von Carbonfasern, um eine möglichst große Oberfläche für das Beschichten mit RFL zu erhalten, damit gewährleistet wird, dass auch im Inneren des Filamentbündels sich befindliche Filamente mit dem Reagenz beschichtet werden.
Die Verfahren und die daraus erhaltenen Bändchengarne, des Standes der Technik weisen jedoch noch stets den Nachteil auf, dass die Haftung der Filamente zu den "aktivierbaren" Additiven bzw. Beschichtungen teilweise zu wünschen übrig lässt, insbesondere, wenn es zum Einsatz von Filamenten aus Polymeren kommt, die per se keine gute Haftung aufweisen, wie z.B. aus Polyester.

Mittels der vorliegenden Erfindung wird dieses Problem gelöst durch ein Verfahren zur Herstellung eines Bändchengarns gemäß Anspruch 1 umfassend die folgenden Schritte:
a) Vorlegen eines Garnes aus Multifilamenten auf Basis Polyamid und/oder Polyester,
b) Aufspreizen des Garnes, dass nicht mehr als fünf Filamente übereinander liegen,
c) Fixieren des Garnes durch Ausbildung einer Matrix aus einem oder mehreren (geeigneten) Fixiermitteln,
d) Aufwickeln des fixierten Garnes, dadurch gekennzeichnet, dass das oder die Fixiermittel ausgewählt werden aus einer Gruppe bestehend aus Copolyamiden, Copolyestern und Silikonen sowie Mischungen oder Blends daraus, wobei das Fixiermittel mit einer Menge von 1 bis 1 Gew-% bezogen auf das Gewicht des Multifilamentgarns aufgebracht wird und dass das Aufwickeln verdrehungsfrei durchgeführt wird.
Für das erfindungsgemäße Verfahren ist es noch vorteilhafter, wenn das Garn aus Multifilamenten so weit aufgespreizt wird, dass nicht mehr als maximal drei Filamente (Einzelfilamente, also Endlosfasern) übereinander liegen.
In der EP-A-2 374 923 werden dagegen Garne vorgelegt und diese Garne dann mit einem aktivierbaren Additiv oder Coating behandelt und anschließend die Bändchengarnstruktur durch Zusammendrücken eingestellt.
Durch das Aufspreizen im erfindungsgemäßen Verfahren wird allerdings ein erheblicher besserer Verteilungsgrad des Fixiermittels erreicht, wodurch es zu einer deutlich besseren Haftung kommt, auch wenn keine anschließende Druckbehandlung erfolgt.
Als Fixiermittel - im Folgenden auch als Binder bezeichnet - für die Ausbildung der Matrix wird bevorzugt ein thermoplastisches Copolyamid, besonders bevorzugt ein Copolyamid mit einem Schmelzpunkt zwischen 120 und 150 °C, eingesetzt. Wie weiter unten noch näher beschrieben wird, erfolgt der Einsatz vorzugsweise in wässriger und/oder ethanolischer Suspension bzw. Lösung.
Alternativ dazu kann als duroplastisches Fixiermittel ein reaktives Silikon, bevorzugt in Form von Polysiloxanen eingesetzt werden.

Besonders gut eignen sich dafür Polysiloxane, die in der Hauptkette bzw. in den Seitenketten (ungesättigte) Vinylgruppen enthalten.
Alternativ kommen als Binder auch Copolyester zum Einsatz.

Es hat sich für eine Reihe von Anwendungen - insbesondere, wenn für die Fixierung Silikone eingesetzt werden, als günstig erwiesen, wenn ein Garn aus Multifilamenten eingesetzt wird, von dem zuvor weitgehend die Ausrüstungs- und Schlichtemittel entfernt worden sind.
Die Entfernung von Ausrüstungs- bzw. Schlichtemittel gelingt durch an sich bekannte Waschprozesse, vorzüglich allerdings mittels Behandlung durch sogenannte Staustrahlwäscher. Ein geeigneter Staustrahlwäscher ist beispielsweise in der EP-B-0711247 beschrieben. Der positive Effekt daraus ist, dass nach dem anschließenden Verweben auf einen Waschprozess verzichtet werden kann, weil das Gewebe auch so hervorragende Resistenz gegen Brennen nach EASC 3.12. bzw. ISO 3795 zeigt. Darüber hinaus bewirkt der Waschprozess, dass die Haftung gegenüber der Silikonbeschichtung (wenn dann noch erforderlich) verbessert wird.

Es kann weiterhin zweckmäßig sein, wenn das fixierte Garn vor dem Aufwickeln noch kalandriert wird, wobei zum Kalandrieren bevorzugt ein beheizbares Walzenpaar, insbesondere aber ein beheizbares Walzentrio, verwendet wird.
Das Kalandrieren bewirkt u.a., dass das erhaltene Bändchengarn gas- bzw. luftdicht wird und kann dazu führen, dass ein gewöhnlicherweise später erfolgender Beschichtungsschritt des Gewebes durch diesen "Versiegelungseffekt" obsolet wird. Das Bändchengarn wird mittels Kalandrierung "verschiebefest".

Für das erfindungsgemäße Verfahren ist es auch bevorzugt, wenn das Aufwickeln der mittels Fixiermittel verfestigten Garne verdrehungsfrei durchgeführt wird.

Die zum Einsatz kommenden Garne enthalten bevorzugt Multifilamente aus Polyamid, Copolyamid, oder Polyester und/oder Mischungen daraus. Unter den Polyamiden eignen sich hervorragend die aliphatischen Polyamide Polyamid 6, Polyamid 6.6 sowie Polyamid 4.6. Prinzipiell ist selbstverständlich auch der Einsatz von aromatischen Polyamiden möglich, so beispielsweise von Poly-p-phenylenterephthalamid (PPTA).
Unter den Polyestern eigen sich besonders das Polyethylenterephthalat (PET) sowie Polymilchsäure (Polylactide, PLA).
Die Herstellung der Bändchengarne sowie deren Einsatz für z.B. das Herstellen von Airbaggeweben bzw. von Reifenverstärkungen sowie bevorzugte Ausführungsformen soll nunmehr näher erläutert werden.

Es wird ein Multifilamentgarn vorgelegt, beispielsweise gesponnen aus Polyamid 6.6 mit einem Titer von 1880 dtex und 280 Einzelfilamenten. Das Multifilamentgarn wird vorzugsweise im ungetangelten Zustand vorgelegt, d.h. es werden nach dem Spinnprozess keine Tangeldüsen oder andere Arten zur Verwirbelung des Garnes eingesetzt.
Das Garn kann dann einem Waschprozess unterzogen werden. Das Waschen ist beispielsweise angeraten, wenn der Fixierschritt mit einem reaktiven Silikon, also beispielsweise einem Polysiloxan erfolgen soll. Hintergrund ist, dass die Ausrüstungs- bzw. Schlichtemittel das Brennverhalten bei späteren Anwendungen, beispielsweise als Airbag, negativ beeinflussen (erhöhen).
Wird beispielsweise ein Copolyamid als Binder bzw. Fixiermittel verwendet, dann ist das spätere Brennverhalten überraschenderweise auch bei Fixierung von ungewaschenen, also noch Ausrüstungs- bzw. Schlichtemittel enthaltenden Garnen, nicht erhöht im Vergleich zu den gewaschenen Garnen. Es wird vermutet, dass durch die Fixierung mit dem Copolyamid als Binder die Ausrüstungs- und Schlichtmittelpartikel gewissermaßen "eingekapselt" werden und auf diese Weise nicht mehr die Brennbarkeit erhöhen können. Aber auch beim Einsatz der Copolyamide hat sich der additionelle Waschschritt als vorteilhaft herausgestellt. Wie bereits oben ausgeführt, ist es besonders vorteilhaft, wenn das (optionale) Waschen mit Hilfe von Staustrahlwäschern durchgeführt wird.

Dem Waschprozess kann ein Trocknungsschritt nachgeschaltet sein. Die Trocknung ist wiederum eher angeraten, wenn als Binder beispielsweise ein reaktives Silikon eingesetzt wird, da Polysiloxane empfindlich auf die Anwesenheit von Feuchtigkeit reagieren und Phasenseparation mit Wasser eintritt. Aber auch beim Einsatz von Copolyamiden als Binder kann der Trocknungsvorgang vorteilhaft sein, da das gleichmäßige Aufbringen des Fixiermittels aus wässriger und/oder ethanolischer Suspension bzw. Lösung mitunter schwierig ist, wenn das Multifilamentgarn im feuchten bzw. nassen Zustand vorliegt.
Die Trocknung kann in an sich bekannter Weise erfolgen, beispielsweise durch einen heißen Luftstrom, bevorzugt wird jedoch die Trocknung in einem Ofen. Getrocknet wird bis zu einem Restfeuchtigkeitsgehalt von unter 5 Gew.-%, bevorzugt bis zur Gleichgewichtsfeuchte des jeweiligen Multifilamentgarns.
Nach dem Vorlegen und ggf. Waschen und Trocknen erfolgt das Aufspreizen - auch Vereinzeln - des Multifilamentgarnes. Dabei werden - z.B. mechanisch mittels Stiften - die einzelnen das Multifilamentgarn bildenden (Einzel-)Filamente parallel nebeneinander ausgerichtet, sodass nicht mehr als 5, bevorzugt nicht mehr als 3, Einzelfilamente mehr übereinander liegen.
Sodann erfolgt das Aufbringen des Fixiermittels auf das derart aufgespreizte Multifilamentgarn. Die Aufbringung als Zwangsapplikation kann in einer dem Fachmann bekannten Art erfolgen und hängt im Wesentlichen von der Konsistenz und Art des Binders ab, beispielsweise durch einen Lickroller, durch Führen durch ein Tauchbad, durch Aufsprühen mittels eines Sprayers oder durch eine Walze.
Die Auftragsmenge ist abhängig von der Art des eingesetzten Multifilamentgarns und insbesondere von dem späteren Einsatzbereich. 1 bis 10 Gew.-% und bevorzugt 1 bis 5 Gew.-%, bezogen auf das Gewicht des Multifilamentgarns werden dabei eingesetzt. Das Fixieren bzw. Aushärten erfolgt anschließend durch Reaktion, Verweilzeit und Temperatur, und vorzugsweise ohne Druckaufbringung.
Wird ein Polysiloxan eingesetzt, so handelt es sich bevorzugt um ein vernetzbares Silikon der Fa. Wacker, das unter dem Namen "DEHESIVE 920" bzw. DEHESIVE 971 vertrieben wird. Es handelt sich dabei um eine Mischung aus einem reaktiven Polysiloxan, das innerhalb der Kette oder als Seitenketten Vinylgruppen aufweist, beispielsweise CH₂=CH-(Si(CH₃)₂-O)ₙ-CH=CH₂ mit n zwischen 2 und 200, bevorzugt 10 bis 100 und noch bevorzugter 20 bis 50. Weiterhin enthält die Mischung ein kurzkettiges Silan (HX) als Vernetzer sowie einen Platinkatalysator (OL). Das kurzkettige Silan ist in der Lage, an die Vinylgruppen des Polysiloxan zu addieren und somit die Vernetzung auszulösen. Die Viskosität des reaktiven Polysiloxan-Gemisches liegt bei etwa 500 mPas. Der besondere Vorteil dieses reaktiven Polysiloxans liegt in der Tatsache, dass bei einer Verwendung des so fixierten Bändchengarns im Airbag die dann erfolgende Beschichtung mit Silikon erheblich einfacher vonstattengeht, da bereits eine Voraktivierung und damit Haftungsverbesserung des Bändchengarns durch diese Fixierung erfolgt ist. Im späteren Airbaggewebe ist dadurch die Filmbildungseigenschaft deutlich besser ausgeprägt, was sich in einer stark erhöhten Haftung zu der üblichen Airbagbeschichtung mit Silikon/Kautschuk bemerkbar macht.
Überraschenderweise weisen die mit dem reaktiven Silikon beschichteten Bändchengarne ein deutliches verbessertes Anti-Wicking Verhalten auf. Dieses macht die Bändchengarne vorzüglich geeignet für Anwendungen im textilen Bauen, wo der Wicking-Effekt (Dochtwirkung) sehr unerwünscht ist.
Darüber hinaus zeigt das mit Silikon hergestellte Bändchen beim Weben überraschenderweise eine erhöhte Schnittfestigkeit.

Ein weiteres bevorzugtes Fixiermittel ist das ebenfalls von der Fa. Wacker vertriebene "VINNAPAS 441", ein Ethylen-Vinylacetat-Copolymer.

Weiterhin bevorzugt als Binder sind unter dem Namen "GRILTEX" von der Fa. EMS Chemie vertriebene Copolyamide bzw. Copolyester. Diese Copolyamide und Copolyester werden entweder in wässriger Suspension (z.B. Griltex 2A, 40%ig) oder als ethanolisch/wässrige Lösung angeboten (z.B. Griltex D 1523A) und können im erfindungsgemäßen Verfahren direkt oder verdünnt auf etwa 10 bis 20% eingesetzt werden. Ganz besonders bevorzugt ist Griltex® 2A Copolyamide Hotmelt Adhesive. Im Unterschied zum Polysiloxan erfolgt die Aktivierung hier durch Wärme, da das Copolyamid einen Schmelzbereich von etwa 120 bis 150°C aufweist. Der Einsatz des Copolyamids hat den großen Vorteil, dass beispielsweise bei dem Einsatz als Airbaggewebe ein sortenreines Gewebe vorliegt. Darüber hinaus ist es möglich, durch entsprechende Konzentrationserhöhung die Filmbildung lediglich durch das Fixiermittel erfolgen zu lassen, indem lediglich nach Herstellung des Airbaggewebes das Copolyamid wieder aufgeschmolzen wird und so die Filmbildung ausgelöst wird. Von besonderem Vorteil ist, dass man sich dann die anschließende Behandlung mit Silikon/Kautschuk zur Airbagbeschichtung ersparen kann. Es wird also bereits durch das Fixiermittel eine geschlossene Fläche auf dem Gewebe ausgebildet. Besonders bevorzugt wird das Copolyamid als wässrige Suspension eingesetzt, wobei die Partikelgröße der Copolyamidpartikel kleiner sein soll als im Durchschnitt 1 µm. Im besonders bevorzugten Griltex 2A liegt die Partikelgröße von 90 vol.-% bei maximal 0,9 µm. Es handelt sich bei diesem besonders bevorzugten Fixiermittel an sich um einen Klebstoff, der jedoch im erfindungsgemäßen Verfahren besonders gute Eigenschaften aufweist, wie weiter unten noch ersichtlich ist.
Das besonders bevorzugte Copolyamid hat einen Schmelzbereich (bestimmt über DSC) von 120 - 130 °C, eine Glasumwandlungstemperatur (T_{g}) (bestimmt über DSC) von 17 °C, eine Schmelzviskosität (Mittelwert nach ISO 1133 bei 160°C/2.16 kg) von 600 Pa*s, einen Schmelzvolumenindex MVR (Mittelwert nach ISO 1133 bei 160°C/2.16 kg) von 18 cm³/10 min, eine relative Viskosität (in 0,5% m-Kresol) von 1,47 und eine Dichte (bestimmt nach ISO 1183) von 1,05 g/cm³.
Geeignete Copolyamide und deren Herstellung sind beispielsweise in den Ausführungsbeispielen der EP 1 153 957 A2 beschrieben.
Die Auftragsmenge an Copolyamid auf die Garne liegt besonders bevorzugt im Bereich von 1 bis 10 Gew.-%, besonders bevorzugt 2-5 Gew.-%, bezogen auf die Garnmenge. Wie bereits erwähnt, variiert die Garnmenge in Abhängigkeit des Einsatzgebietes des erhaltenen Bändchengarns. So kann es zweckmäßig sein, eine verhältnismäßig hohe Auftragsmenge an Copolyamid aufzubringen, wenn man z.B. auf die bislang notwendige Silikonisierung des späteren Airbaggewebes verzichten möchte, um die Gasdichtheit bereits mit Hilfe des Fixiermittels - mit anschließendem Kalandrierungsschritt - zu erreichen.

Ein weiteres bevorzugtes Fixiermittel im erfindungsgemäßen Verfahren stellt ein Copolyester dar, ebenfalls vertrieben durch die Fa. EMS Chemie, der insbesondere für Multifilamentgarne aus Polyethylenterephthatalat Einsatz findet. Besonders für Anwendungen der so fixierten Bändchengarne in Geweben, die nachher mit PVC beschichtet werden, erweist sich ein solcher Binder als ausgezeichnet geeignet, da hierbei auf die sonst nötigen Isocyanate als Haftvermittler verzichtet werden kann. Nach der Beschichtung und Aktivierung erfolgt das Aufwickeln der so erhaltenen Bändchengarne. Hierbei ist es angeraten, dass die Aufwicklung verdrehungsfrei erfolgt, um den "Bändchencharakter" nicht wieder zunichte zu machen. Das Aufwickeln erfolgt bevorzugt mit Hilfe eines neuartigen Wicklers der Fa. Sahm, eine Parallelspulmaschine vom Modell Sahm 460 XE. Bei diesem Wickler bewegt sich die Spule während des Aufwickelprozesses und nicht das Bändchengarn, um Verdrehungen zu vermeiden.
Vorteilhaft ist es, wenn das Bändchengarn vor dem Aufwickeln mittels eines Rollenduos, oder bevorzugt Rollentrios, vorgespannt wird. Zum einen, um eine Kalandrierung zu erzeugen, jedoch noch vielmehr, um für eine gleichmäßige Spannung zu sorgen, die während des Fixierschrittes möglichst niedrig sein sollte. Eine solche gleichmäßige Spannung ist auch für die gleichmäßige Ausbildung der Bändchen wichtig. Als günstig hat sich beispielsweise für das Polyamid-Multifilamentgarn 1880 dtex f 280 eine Spannung im Bereich von etwa 50 bis 200 g erwiesen.
Mit Hilfe des Wicklers und der gleichmäßigen Spannung kommt es bereits weitgehend zu der gewünschten verdrehungsfreien Aufwicklung der Bändchengarne. Die Vergleichmäßigung der Spannung kann noch zusätzlich verbessert werden, indem auch spannungsgesteuerte Abwickler eingesetzt werden. Beispiele hierfür sind zum einem der GAR Abrollen der Fa. Karl Mayer sowie die Abrolleinheit Modell Sahn Bitensor 910 E der Fa. Sahm.

Die derart hergestellten Bändchengarne zeichnen sich durch ausgezeichnete Festigkeit (wichtig z.B. für den Luftsack oder bei der Reifenverstärkung), bei gleichzeitig deutlich weniger Garneinsatz als in konventionellen Verfahren aus. Dadurch ergibt sich eine erhebliche Gewichtsreduzierung, was sich z.B. auch in der besseren Packbarkeit des Luftsackes auswirkt.
Im Bereich der Gummiverstärkung kann durch die flache Geometrie der Bändchen Gummi eingespart werden, so dass z.B. bei Einsatz als Stahlgürtelbandage in Radialreifen der Reifen leichter wird und gleichzeitig einen geringeren Rollwiderstand aufweist, da weniger Gummi zwischen Stahlgürtel und Lauffläche verwendet werden kann. Die parallele Ausrichtung der einzelnen Filamente im Bändchen bewirkt darüber hinaus eine weitere Steigerung des Moduls gegenüber dem üblicherweise eingesetzten Reifenkord, so dass gleichzeitig die Hochgeschwindigkeitsperformance des Reifens weiter gesteigert wird..
Als additionelles Fixiermittel kann daher im Verfahren gemäß der Erfindung ein RFL Dip (Resorcin-Formaldehyd-Latex Dip) eingesetzt werden. Resorcin-Formaldehyd-Vorkondensate sind als Haftvermittlerkomponente für gummierte Gewebe bekannt. Für die Herstellung des Dips wird dabei das Vorkondensat zusammen mit den Latexdispersionen und anderen Ingredienzien zu sogenannten Resorcin-Formaldehyd-Latex (RFL)-Dips verarbeitet.
Als Karkassenverstärkung in Radialreifen, z. B. für Flugzeugreifen, bieten diese Bändchengarne gegenüber Korden aus Filamentgarnen einen höheren Modul. Ebenso wird die Gummihaftung bzw. die Haftung zu Polyvinylchlorid (PVC) verbessert, da die haftungswirksame Oberfläche größer ist und fast alle Filamente eine Haftungsbrücke mit dem Gummi haben. Im Gegensatz dazu ist bei runden oder gezwirnten Garnen ein Teil der Filamente im Inneren eingeschlossen und hat keinen Kontakt/ Haftung zur umgebenden Matrix.

Bei der Herstellung von Geweben kann die Effektivität gesteigert werden, da man mit erheblich reduziertem Schusseintrag arbeiten kann.

Die Gewichtsersparnis durch die hohe Flächenabdeckung der Bändchengarne und der Anti-Wicking Effekt zeigen sehr große Vorteile beim textilen Bauen.
Derartige Gewebe sind auch hervorragend für die Herstellung von Segeln geeignet. Darüber hinaus erlaubt die Tatsache, dass die Bändchengarne praktisch kein "Wicking-Verhalten" aufweisen, ein weitaus besseres Recyclingverhalten, da auf den Zusatz von zumeist fluorhaltigen Additiven zur Reduktion des Wicking-Effektes bei herkömmlichen Geweben verzichtet werden kann.
Die Erfindung ist ebenfalls auf Bändchengarne aus Multifilamentgarnen auf Basis von Polyamid und/oder Polyester gemäß Anspruch 9 gerichtet.

Bevorzugt liegen innerhalb des erfindungsgemäßen Bändchengarnes nicht mehr als maximal drei Filamente übereinander.
Das Bändchengarn gemäß Erfindung hat eine Breite (Tapebreite) von mindestens 3,5 mm. Insbesondere beim Einsatz von Polyamid 6.6 Filamenten und bei Verwendung des Copolyamids als Fixiermittel, besonders bevorzugt des "GRILTEX 2A" wird eine gute Haftung der gespreizten Einzelfilamente im Verbund erreicht. Diese wird hervorgerufen durch die gute thermoplastische Verformbarkeit der Matrix. Gleichzeitig erlaubt dieses thermoplastische Verhalten der Matrix anschließend im Gewebe aber, dass die einzelnen Bändchengarne in Kette und Schuss durch Beaufschlagung des fertigen Gewebes mit Temperatur und Druck in gewissem Masse untereinander verbunden werden, so dass hier der bereits erwähnte Versiegelungseffekt eintritt, der die Gasdichtigkeit des Gewebes verbessert und ein anschließendes Beschichten mit z.B. Silikon überflüssig macht, bzw. die benötigten Beschichtungsmengen signifikant reduziert.

Besonders vorteilhaft ist, dass das resultierende Bändchengarn flexibel bleibt im automobiltypischen Temperaturband von minus 30 bis plus 110 °C Besonders überraschend wurde gefunden, dass die Flexibilität auch bei sehr tiefen Temperaturen durch Behandlung in flüssigem Stickstoff nur minimal abnimmt. Dies qualifiziert das erfindungsgemäße Bändchengarn für weitere Anwendungen, die unter Tiefsttemperaturen stattfinden.

Weiterhin ist die Erfindung auf Airbaggewebe gerichtet, hergestellt aus den erfindungsgemäßen Bändchengarnen, wobei diese Airbagewebe ohne die üblicherweise notwendige Beschlichtung bei der Kettherstellung sowie ohne das nach dem Verweben übliche Waschen hergestellt werden und ggf. sogar ohne die üblicherweise notwendige anschließende Beschichtung zur Erreichung der Gasdichtigkeit direkt eingesetzt werden können.

Die Erfindung soll anhand der folgenden Beispiele näher erläutert werden:
Es wurden Bändchengarne aus Polyamidfilamenten mit einem Nominaltiter von 1880 dtex f280 hergestellt. Die textilen Daten der eingesetzten Filamente sind in Tab. 1 zusammengefasst. Es bedeuten: LD = Linear density (Titer gemessen), EASF 45 N = Dehnung bei einer Kraft von 45 N, EASF 90 N = Dehnung bei einer Kraft von 90 N, HAS 5 mN/tex = Hot air shrinkage (Heißluftschrumpf) bei einer Vorspannkraft von 5 mN/tex (gemessen bei 180°C für 2min).

**Tab. 1**

| **Versuch** | **LD** | **Bruchkraft** | **Bruchfestigkeit** | **Bruchdehnung** | **EASF 1** | **EASF 2** | **HAS** | **Arbeit** |
|---|---|---|---|---|---|---|---|---|
| | | | | | 45 N | 90 N | 5 mN/tex | |
| | [dtex] | [N] | [cN/tex] | [%] | [%] | [%] | [%] | [N*cm] |
| 140 HRT | 1922 | 158,67 | 82,56 | 21,11 | 7,43 | 10,86 | 4,59 | 897,01 |
| PAB 2011-028 | 1934 | 156,49 | 80,91 | 19,77 | 7,08 | 10,55 | 5,17 | 818,01 |
| PAB 2011-031 | 1941 | 158,08 | 81,44 | 20,70 | 7,25 | 10,75 | 4,93 | 870,58 |
| PAB 2011-044 | 1930 | 157,45 | 81,58 | 20,45 | 7,06 | 10,50 | 4,95 | 862,42 |
| PAB 2011-048 | 1920 | 157,29 | 81,92 | 20,44 | 7,30 | 10,87 | 5,04 | 848,97 |
| PAB 2011-057 | 2011 | 158,95 | 79,04 | 23,18 | 8,06 | 12,30 | 3,17 | 970,07 |
| PAB 2011-059 | 2007 | 153,95 | 76,71 | 22,01 | 8,84 | 13,13 | 2,83 | 824,99 |
| PAB 2011-060 | 1954 | 157,22 | 80,46 | 21,50 | 7,74 | 11,68 | 3,52 | 877,18 |

Die aus den in der Tab. 1 aufgelisteten Filamenten erhaltenen Bändchengarne wurden mit unterschiedlichen Fixiermitteln fixiert.
Eine Übersicht über die Fixiermittel sowie die Fixierbedingungen ist in der Tab. 2 enthalten.

**Tab. 2**

| **Versuchsnummer** | **Additiv** | **Auftrag** | **Lösemittel** | **Wannentemperatur** | **Wäsche** |
|---|---|---|---|---|---|
| PAB 2011-028 | Delion F-6120(Tret N-103) | 1,06% | Wasser | 125 °C | nein |
| PAB 2011-031 | Griltex 2A | 1,33 % | Wasser | 160 °C | nein |
| PAB 2011-032 | Griltex 2A | 1,38 % | Wasser | 160 °C | nein |
| PAB 2011-044 | Griltex D1523A GF | 0,96% | Ethanol / Wasser 80:20 | 160 °C | nein |
| PAB 2011-048 | Griltex D1523A GF | 0,96% | Ethanol / Wasser 80:20 | 160 °C | ja |
| PAB 2011-057 | Dehesive 971 | 3,83 % | Testbenzin D 40 | 230 °C | ja |
| PAB 2011-059 | Vinnapas EP 441 | 2,55 % | Wasser | 230 °C | ja |
| PAB 2011-060 | EP 441 / WT 57 | 2,55 % | Wasser | 230 °C | ja |

Mit Delion F-6120 (Polyesterwachs von Takemoto), Griltex® 2A und Griltex® D1523A GF (Copolyamide von EMS Chemie AG Business-Unit: Ems-Griltech, Schweiz), Dehesive® (Silikon von Wacker-Chemie), Vinnapas® EP 441 (Vinyl Copolymer von Wacker-Chemie) und Vinnapas® EP 441/WT 57 (Si-Vinyl-Copolymerblend von Wacker-Chemie).

An den so erhaltenen Garnen wurden Bestimmungen der Weiterreißkraft mit dem Schenkelweiterreißversuch gemäß DIN EN ISO 13937-2 durchgeführt.

Die Prüfbedingungen für Bändchengarne lauteten wie folgt:

Die Probenlänge beträgt 150 mm davon werden etwa 40 mm mittig mit einer Nadel getrennt und die Schenkel an der Prüfvorrichtung befestigt.
Die Einspannlänge beträgt 50 mm, Abzugsgeschwindigkeit 100 mm/min und die Messwerterfassung erfolgt über 150 mm Weg.
Der Weiterreißweg wird vom ersten bis zum letzten aufgezeichneten Spitzenwert in vier gleiche Abschnitte unterteilt. Während der erste Abschnitt unberücksichtigt bleibt, werden sämtliche Spitzenwerte des restlichen Weges mit einer Kraftabfallerkennung von 15 % vom Spitzenwert (Fmax Spitze) ausgewertet.

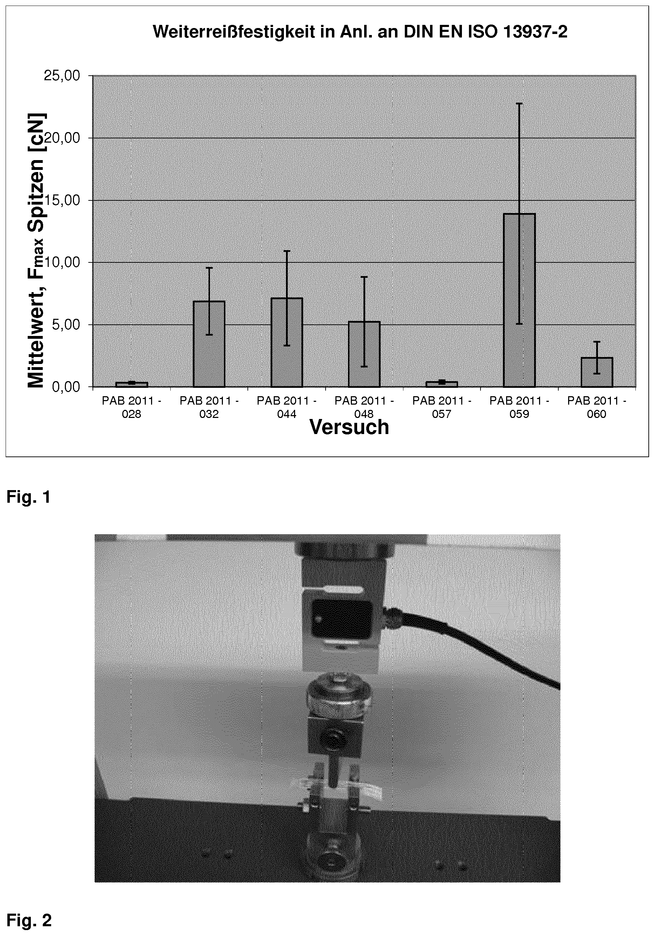

Von 20 Einzelbestimmungen (Mittelwerte der Fmax Spitzen (cN)) pro Bändchen wurde der Mittelwert mit der Standardabweichung und dem Variationskoeffizienten bestimmt.
Tab. 3 zeigt die Ergebnisse, die graphisch auch nochmal in der Fig. 1 dargestellt sind.

**Tab. 3**

| Versuch | PAB 2011 - 028 | | PAB 2011 - 032 | | PAB 2011 - 044 | | PAB 2011 - 048 | | PAB 2011 - 057 | | PAB 2011 - 059 | | PAB 2011 - 060 | |
|---|---|---|---|---|---|---|---|---|---|---|---|---|---|---|
| | Mw | | Mw | | Mw | | Mw | | Mw | | Mw | | Mw | |
| | Fmax Spitzen [cN] | Anzahl Spitzen | Fmax Spitzen [cN] | Anzahl Spitzen | Fmax Spitzen [cN] | Anzahl Spitzen | Fmax Spitzen [cN] | Anzahl Spitzen | Fmax Spitzen [cN] | Anzahl Spitzen | Fmax Spitzen [cN] | Anzahl Spitzen | Fmax Spitzen [cN] | Anzahl Spitzen |
| | 0,35 | 328 | 9,94 | 19 | 6,15 | 29 | 7,88 | 28 | 0,48 | 341 | 23,80 | 18 | 2,54 | 38 |
| | 0,38 | 327 | 6,41 | 25 | 6,16 | 42 | 4,83 | 38 | 0,24 | 382 | 8,66 | 31 | 4,73 | 18 |
| | 0,38 | 329 | 6,05 | 30 | 16,04 | 22 | 1,62 | 96 | 0,41 | 353 | 26,66 | 15 | 1,98 | 47 |
| | 0,33 | 343 | 9,21 | 23 | 12,79 | 27 | 4,90 | 35 | 0,38 | 356 | 29,67 | 19 | 3,06 | 35 |
| | 0,40 | 316 | 5,56 | 36 | 7,88 | 26 | 4,85 | 33 | 0,40 | 355 | 14,32 | 11 | 6,23 | 14 |
| | 0,43 | 329 | 3,42 | 49 | 10,08 | 25 | 2,33 | 83 | 0,31 | 383 | 8,04 | 29 | 1,60 | 84 |
| | 0,36 | 351 | 6,76 | 24 | 10,15 | 27 | 6,37 | 50 | 0,60 | 372 | 3,47 | 57 | 2,29 | 71 |
| | 0,33 | 355 | 4,54 | 42 | 3,49 | 44 | 2,74 | 73 | 0,49 | 324 | 10,64 | 25 | 2,03 | 85 |
| | 0,52 | 302 | 9,40 | 21 | 7,21 | 29 | 1,15 | 131 | 0,34 | 360 | 23,28 | 23 | 2,02 | 92 |
| | 0,38 | 342 | 4,66 | 33 | 4,19 | 41 | 12,18 | 31 | 0,34 | 370 | 28,90 | 19 | 1,21 | 165 |
| | 0,28 | 355 | 12,54 | 14 | 10,41 | 24 | 13,86 | 16 | 0,68 | 280 | 6,20 | 43 | 1,16 | 138 |
| | 0,27 | 339 | 2,42 | 73 | 4,91 | 29 | 3,06 | 58 | 0,44 | 358 | 6,69 | 32 | 2,74 | 67 |
| | 0,50 | 293 | 5,88 | 34 | 3,78 | 43 | 8,31 | 32 | 0,23 | 392 | 12,85 | 17 | 1,16 | 149 |
| | 0,32 | 335 | 10,82 | 20 | 3,16 | 51 | 4,09 | 43 | 0,59 | 301 | 17,97 | 16 | 2,66 | 58 |
| | 0,28 | 359 | 8,82 | 18 | 4,92 | 31 | 10,16 | 29 | 0,25 | 380 | 21,57 | 16 | 1,24 | 128 |
| | 0,37 | 340 | 8,89 | 19 | 1,82 | 89 | 3,53 | 51 | 0,22 | 388 | 8,80 | 27 | 1,16 | 146 |
| | 0,20 | 374 | 5,12 | 41 | 2,38 | 78 | 1,02 | 159 | 0,30 | 366 | 8,17 | 35 | 1,09 | 149 |
| | 0,22 | 364 | 6,41 | 28 | 11,77 | 23 | 3,76 | 39 | 0,19 | 399 | 11,96 | 29 | 2,63 | 65 |
| | 0,26 | 247 | 3,46 | 54 | 6,63 | 28 | 5,27 | 34 | 0,51 | 333 | 1,47 | 174 | 2,54 | 62 |
| | 0,30 | 357 | 7,24 | 24 | 8,43 | 27 | 2,78 | 46 | 0,26 | 386 | 5,18 | 37 | 2,77 | 51 |
| n=20 | | | | | | | | | | | | | | |
| Mittelwert | 0,34 | 334 | 6,88 | 31 | 7,12 | 37 | 5,23 | 55 | 0,38 | 359 | 13,92 | 34 | 2,34 | 83 |
| s | 0,08 | | 2,69 | | 3,81 | | 3,59 | | 0,14 | | 8,84 | | 1,28 | |
| V | 24,20 | | 39,15 | | 53,48 | | 68,50 | | 35,32 | | 63,53 | | 54,61 | |

Die Biegesteifigkeit der fixierten Bändchengarne wurde im Labor in Anlehnung an die ASTM D 4043 ermittelt. Das Prüfgerät ist in der Fig. 2 dargestellt.

Die Geräteparameter waren wie folgt:

| | | |
|---|---|---|
| Probengröße: | 10 Fäden parallel | |
| Länge: | 50 mm zuzüglich ca. 5 mm rechts und links für Garnfixierung | |
| Breite: | ca. 10 mm | |
| Stützweite: | 25 mm | |
| L₀ = | 10 mm | (Abstand Druckbalken von Stützhöhe) |
| Lₘₐₓ = | 25 mm | Fahr-, Prüfweg |
| V = | 500 mm/min | Prüfgeschwindigkeit |

Die Ergebnisse sind in Tabelle 4 zusammengefasst.

**Tab. 4**

| Versuchsnummer | Biegesteifigkeit | | |
|---|---|---|---|
| | F max cN | s | v |
| PAB 2011-028 | 1,77 | 0,3 | 17,04 |
| PAB 2011-031 | 1,63 | 0,29 | 17,87 |
| PAB 2011-032 | 1,58 | 0,16 | 10,16 |
| PAB 2011-044 | 4,28 | 0,81 | 18,91 |
| PAB 2011-048 | 3,03 | 0,24 | 8,04 |
| PAB 2011-057 | 2,73 | 0,49 | 17,8 |
| PAB 2011-059 | 4,38 | 0,05 | 1,07 |
| PAB 2011-060 | 3,39 | 0,18 | 5,23 |

Zur Bestimmung der Temperaturbeständigkeit bzw. des Temperaturverhaltens von erfindungsgemäßen Bändchengarnen wurden das Grundgarn EN 140HRT, dtex 1880f280 sowie das darauf basierende Bändchengarn mit 1,8% Co-polyamid 2A Auftrag untersucht.
Geprüft wurde auf einer Zwick Universalprüfmaschine mit Temperaturkammer in Anlehnung an die ISO 2062 (Garn) bzw. DIN EN ISO 13934 (Gewebe) Festigkeit und Bruchdehnung im automobiltypischen Temperaturspektrum von -35°C, 23°C, 85°C und 110°C.
Abweichend von der ISO wurde mit einer Einspannlänge des Prüfkörpers von 250mm anstelle von 500 mm gearbeitet. Dargestellt sind jeweils die Mittelwerte von fünf Bestimmungen.

**Tab. 5 EN 140 HRT, dtex 1880f280, Spule 47 - Grundgarn**

| Temp °C | BF N | EASF 11,3N % | BT cN/tex | EAB % | E-Mod cN/tex | W BF J | W_BT J/tex | W BT N*mm/(tex*g/cm3) |
|---|---|---|---|---|---|---|---|---|
| *-35* | *180,5* | *0,8* | *96,0* | *16,6* | *665* | *3,602* | *0,019* | *17,0* |
| *23* | *153,0* | *1,3* | *81,4* | *20,2* | *449* | *4,043* | *0,022* | *19,0* |
| *85* | *129,4* | *1,9* | *68,8* | 19,8 | *312* | *3,324* | *0,018* | *15,4* |
| *110* | *116,5* | *2,9* | *62,0* | *20,1* | *195* | *3,095* | *0,016* | *14,6* |

**Tab. 6 Bändchengarn mit 1,8 % Griltex 2A, Spule 256**

| Temp °C | BF N | EASF 11,3N % | BT cN/tex | EAB % | E-Mod cN/tex | W BF J | W_BT J/tex | W BT N*mm/(tex*g/cm3) |
|---|---|---|---|---|---|---|---|---|
| *-35* | *180,5* | *0,8* | *96,0* | *16,6* | *665* | *3,602* | *0,019* | *17,0* |
| *23* | *154,9* | *1,2* | *82,4* | *20,7* | *480* | *4,328* | *0,023* | *20,4* |
| *85* | *131,8* | *1,8* | *70,1* | *20,4* | *319* | *3,632* | *0,019* | *16,9* |
| *110* | *118,6* | *2,7* | *63,1* | *20,8* | *199* | *3,319* | *0,018* | *15,6* |

| | | | | | | | | |
|---|---|---|---|---|---|---|---|---|
| BF = Breaking Force (Reißkraft), EASF = elongation at specific force, BT = Breaking Tenacity (spezifische Reißfestigkeit), EAB = Elonagtion at Break (Bruchdehnung), W BF = Arbeitsvermögen, W BT = spez. Arbeitsvermögen | | | | | | | | |

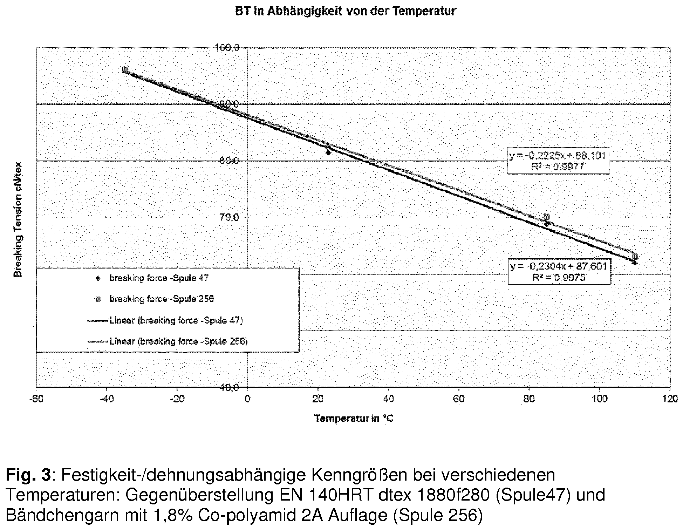

Aus den Tab. 5 und 6 kann entnommen werden, dass Festigkeit (s. auch Fig. 3), E-Modul und Arbeitsvermögen nehmen mit steigender Temperatur ab und zwar in gleichem Maße beim Originalgarn und beim Bändchengarn gemäß Erfindung. Das bedeutet, dass trotz aller Vorteile - insbesondere hinsichtlich der Gewichtsersparnis beim Einsatz des Bändchengarns - keine Nachteile durch die Verwendung des Co-polyamid in Kauf genommen müssen.
Das Dehnverhalten nimmt mit steigender Temperatur etwas zu, jedoch nicht signifikant. Insbesondere ist das Verhalten auch bei Minusgraden durchaus noch akzeptabel.

Anschließend wurde ein Gewebe, hergestellt aus Bändchengarn mit 1,8% Copolyamid 2A Auflage auf Basis von EN140HR, dtex 1880f280 mit einer Konstruktion von 4,4 Faden/cm in der für Airbag üblichen Leinwandbindung, auf gleiche Weise geprüft. Dargestellt sind jeweils die Mittelwerte von vier Bestimmungen.

**Tab. 7 Bändchengarn mit 1,8 % Griltex 2A, Spule 256**

| Temp °C | Breite mm | Höchstzugkraft N | Dehnung bei Höchstzugkraft % |
|---|---|---|---|
| -34,0 | 50 | 3841 | 20,0 |
| 22,8 | 50 | 3206 | 23,2 |
| 85,0 | 50 | 2718 | 23,4 |
| 110,0 | 50 | 2461 | 23,4 |

Das aus dem erfindungsgemäßen Bändchengarn hergestellte Gewebe verhält sich entsprechend dem Garn: Die Festigkeit nimmt mit steigender Temperatur ab, die Dehnung leicht zu.

## Patentansprüche

1. Verfahren zur Herstellung eines Bändchengarns umfassend die folgenden Schritte:
a) Vorlegen eines Garnes aus Multifilamenten auf Basis Polyamid und/oder Polyester,
b) Aufspreizen des Garnes, dass nicht mehr als fünf Filamente übereinander liegen,
c) Fixieren des Garnes durch Ausbildung einer Matrix aus einem oder mehreren Fixiermitteln,
d) Aufwickeln des fixierten Garnes, **dadurch gekennzeichnet, dass** das oder die Fixiermittel ausgewählt werden aus einer Gruppe bestehend aus Copolyamiden, Copolyestern und Silikonen sowie Mischungen oder Blends daraus, wobei das Fixiermittel mit einer Menge von 1 bis 10 Gew.-% bezogen auf das Gewicht des Multifilamentgarns aufgebracht wird und dass das Aufwickeln verdrehungsfrei durchgeführt wird.

2. Das Verfahren nach Anspruch 1, **dadurch gekennzeichnet, dass** das Aufspreizen so durchgeführt wird, dass nicht mehr als maximal drei Filamente übereinander liegen.

3. Das Verfahren nach Anspruch 1 oder 2, **dadurch gekennzeichnet, dass** als Fixiermittel ein Copolyamid in wässriger Suspension oder als ethanolisch/wässrige Lösung direkt oder verdünnt auf etwa 10 bis 20% eingesetzt wird.

4. Das Verfahren nach Anspruch 3, **dadurch gekennzeichnet, dass** es sich bei dem Copolyamid um einen Klebstoff mit einer durchschnittlichen Teilchengröße von weniger als 1 µm handelt.

5. Das Verfahren nach Anspruch 1 oder 2, **dadurch gekennzeichnet, dass** als Fixiermittel ein reaktives Silikon eingesetzt wird.

6. Das Verfahren nach einem oder mehreren der vorhergehenden Ansprüche, **dadurch gekennzeichnet, dass** ein Garn aus Multifilamenten eingesetzt wird, von dem zuvor weitgehend die Ausrüstungs- und Schlichtemittel entfernt worden sind.

7. Das Verfahren nach Anspruch 6, **dadurch gekennzeichnet, dass** die Ausrüstungs- und Schlichtemittel mittels Behandlung durch Staustrahlwäscher entfernt worden sind.

8. Das Verfahren nach einem oder mehreren der vorhergehenden Ansprüche, **dadurch gekennzeichnet, dass** das fixierte Garn vor dem Aufwickeln noch kalandriert wird.

9. Bändchengarn aus Multifilamentengarnen auf Basis von Polyamid und/oder Polyester erhalten nach einem oder mehreren der vorhergehenden Ansprüche 1 bis 8.

10. Verwendung des Bändchengarns nach einem oder mehreren der vorangehenden Ansprüche für das Herstellen von Airbaggeweben.

11. Verwendung des Bändchengarns nach Anspruch 10 zur Herstellung von ungeschlichteten, ungewaschenen und unbeschichteten Airbaggweben.

12. Verwendung des Bändchengarns nach einem oder mehreren der vorangehenden Ansprüche 1- 9 für das Herstellen von Reifenverstärkungen, ggf. unter Zusatz von geeigneten Haftvermittlern.

13. Verwendung des Bändchengarns nach einem oder mehreren der vorangehenden Ansprüche 1- 9 für das textile Bauen.

## Claims

1. Method for producing a tape yarn, comprising the following steps:
a) introducing a yarn made of multifilaments based on polyamide and/or polyester,
b) spreading the yarn such that no more than five filaments overlie one another,
c) fixing the yarn by forming a matrix of one or more fixing agents,
d) winding the fixed yarn, **characterised in that** the fixing agent(s) is/are selected from a group consisting of copolyamides, copolyesters and silicones and also mixtures or blends thereof, wherein the fixing agent is applied in an amount of 1 to 10% by weight with respect to the weight of the multifilament yarn, and **in that** the winding is carried out without twist.

2. The method according to claim 1, **characterised in that** the spreading is performed such that no more than a maximum of three filaments overlie one another.

3. The method according to claim 1 or 2, **characterised in that**, as the fixing agent, a copolyamide in aqueous suspension or as an ethanol/aqueous solution is used directly or diluted to approximately 10 to 20%.

4. The method according to claim 3, **characterised in that** the copolyamide is an adhesive with an average particle size of less than 1 µm.

5. The method according to claim 1 or 2, **characterised in that** a reactive silicone is used as the fixing agent.

6. The method according to one or more of the preceding claims, **characterised in that** a yarn made of multifilaments is used from which finishing and sizing agents have been largely removed beforehand.

7. The method according to claim 6, **characterised in that** the finishing and sizing agents are removed by treatment with ramjet washers.

8. The method according to according to one or more of the preceding claims, **characterised in that** the fixed yarn can also be calendered prior to the winding.

9. Tape yarn made of multifilament yarns based on polyamide and/or polyester obtained according to one or more of the preceding claims 1 to 8.

10. Use of the tape yarn according to one or more of the preceding claims for producing airbag fabrics.

11. Use of the tape yarn according to claim 10 for producing unsized, unwashed, and uncoated airbag fabrics.

12. Use of the tape yarn according to one or more of the preceding claims 1-9 for producing tyre reinforcements, optionally with the addition of suitable adhesion promoters.

13. Use of the tape yarn according to one or more of the preceding claims 1-9 for textile construction.

## Revendications

1. Procédé de fabrication d'un fil ruban comprenant les étapes suivantes :
a) production d'un fil composé de multiples filaments à base de polyamide et/ou polyester,
b) étalement du fil afin que pas plus de cinq filaments ne soient superposés,
c) fixation du fil en formant une matrice composée d'un ou plusieurs agents de fixation,
d) bobinage du fil fixé, **caractérisé en ce que** le ou les agents de fixation sont sélectionnés dans un groupe consistant en copolyamides, copolyesters et silicones ainsi que des mélanges ou amalgames de ceux-ci, l'agent de fixation étant appliqué en une quantité de 1 à 10 % en poids par rapport au poids du fil multifilament, et **en ce que** le bobinage est effectué sans torsion.

2. Procédé selon la revendication 1, **caractérisé en ce que** l'étalement est effectué de sorte que pas plus de trois filaments maximum ne soient superposés.

3. Procédé selon la revendication 1 ou 2, **caractérisé en ce qu'**un copolyamide est utilisé comme agent de fixation en suspension aqueuse ou en solution éthanolique/aqueuse directement ou dilué à environ 10 à 20 %.

4. Procédé selon la revendication 3, **caractérisé en ce que** le copolyamide est un adhésif dont la taille moyenne des particules est inférieure à 1 µm.

5. Procédé selon la revendication 1 ou 2, **caractérisé en ce qu'**un silicone réactif est utilisé comme agent de fixation.

6. Procédé selon une ou plusieurs des revendications précédentes, **caractérisé en ce qu'**un fil composé de multiples filaments est utilisé, dont les agents de finition et d'encollage ont été largement éliminés au préalable.

7. Procédé selon la revendication 6, **caractérisé en ce que** les agents de finition et d'encollage ont été éliminés par traitement avec des laveurs à jet canalisé.

8. Procédé selon une ou plusieurs des revendications précédentes, **caractérisé en ce que** le fil fixe est calandré avant le bobinage.

9. Fil ruban en fils multifilaments à base de polyamide et/ou polyester selon une ou plusieurs des revendications 1 à 8 précédentes.

10. Utilisation du fil ruban selon une ou plusieurs des revendications précédentes pour la fabrication de tissus d'airbag.

11. Utilisation du fil ruban selon la revendication 10 pour la fabrication de tissus d'airbag non encollés, non lavés et non enduits.

12. Utilisation du fil ruban selon une ou plusieurs des revendications 1 à 9 précédentes pour la fabrication de renforcements de pneumatiques, éventuellement avec l'addition d'agents adhésifs appropriés.

13. Utilisation du fil ruban selon une ou plusieurs des revendications 1 à 9 précédentes pour la construction textile.
